# EUROPEAN PATENT APPLICATION

(11) **EP 3 181 812 A1**
(43) Date of publication of application: **21.06.2017**
(21) Application number: 15832192.7
(22) Date of filing: 16.07.2015
(51) Int. Cl.: F01D 5/14, F01D 9/02, F04D 29/32, F04D 29/54, F04D 29/66, F04D 29/68

(54) **AXIAL FLOW-TYPE TURBO MACHINE**

(30) Priority: 13.08.2014 JP 2014164755
(71) Applicant: IHI Corporation, Tokyo 135-8710 (JP)
(72) Inventor: TAKAHASHI, Akira, Tokyo 135-8710 (JP); HAMABE, Masaaki, Tokyo 135-8710 (JP)
(74) Representative: MERH-IP Matias Erny Reichl Hoffmann Patentanwälte PartG mbB
(86) International application number: PCT/JP2015/070348
(87) International publication number: WO 2016/024458

(57) **Abstract**

An axial turbo machine includes: a plurality of blades (12) that constitutes a moving blade row or a stationary blade row; an end wall 1 (30) to which the plurality of blades (12) is fixed and which forms a channel of a fluid together with the blades (12); and at least one concave portion (50) that is locally formed in a region (R) located between the adjacent blades (12) or on the upstream side of a front edge (12a) of the blade (12) on a surface of the end wall (30) and that controls a secondary flow (40) of the fluid.

## Description

### TECHNICAL FIELD

The present invention relates to an axial turbo machine that reduces a pressure loss of a fluid.

### BACKGROUND ART

The axial turbo machine such as a gas turbine engine has respective blade rows of moving blades and stationary blades which are alternately arranged along an axial direction. An end wall that forms a channel in the axial turbo machine together with the blade rows is provided inside or outside each of the blade rows in a radial direction. When the fluid flows into this channel, a secondary flow having a velocity component (a flow direction) different from that of the mainstream is generated due to a pressure gradient and the like between blades, in a boundary layer on the end wall.

The secondary flow generates a vortex involving the pressure loss and makes it grow. In Patent Literature 1, gentle unevenness is provided on the entire surface of the end wall in order to suppress expansion of this vortex.

### CITATION LIST

### PATENT LITERATURE

Patent Literature 1: Japanese Patent No. 4640339

### SUMMARY OF INVENTION

### TECHNICAL PROBLEM

The secondary flow has a tendency to form and diffuse (expand) the vortex as going from a ventral surface of one blade toward a back surface of another blade, both of the surfaces being adjacent to each other. Namely, a region on which the vortex associated with the secondary flow exerts influence expands not only to the vicinity of the end wall but also to a region of the mainstream that flows through a central part of the blade. Such a growth of the secondary flow vortex increases the pressure loss (an energy loss).

Accordingly, an object of the present invention is to provide an axial turbo machine that reduces the pressure loss of the fluid by suppressing spatial expansion of the secondary flow.

### SOLUTION TO PROBLEM

One aspect of the present invention is an axial turbo machine including a plurality of blades that constitutes a moving blade row or a stationary blade row; an end wall to which the plurality of blades is fixed and which forms a channel of a fluid together with the blades; and at least one concave portion that is locally formed in a region located between the adjacent blades or on the upstream side of a front edge of the blade on a surface of the end wall and that controls a flowing direction of a secondary flow of the fluid.

A bending portion that continuously connects a surface of the blade with the surface of the end wall may be provided at a corner that has been formed by fixing of the blade to the end wall. A boundary between the region and another region may include an edge part on the end wall side at the bending portion.

The blades may form a throat of the channel. In this case, the concave portion may be located on the upstream side of the throat.

The concave portion may have a shape of at least one of a circular shape, an elliptical shape, a fan shape and a rectangular shape.

The concave portion may be provided in a plural number in the region.

### ADVANTAGEOUS EFFECTS OF INVENTION

According to the present invention, the axial turbo machine that reduces the pressures loss of the fluid by suppressing spatial expansion of the secondary flow can be provided.

### BRIEF DESCRIPTION OF DRAWINGS

[Fig. 1] Fig. 1 is a schematic cross-sectional diagram showing a gas turbine engine that is an axial turbo machine according to an embodiment of the present invention.
[Fig. 2] Fig. 2 is an enlarged diagram of blades and the periphery thereof in a rotor or a stator of a compressor or a turbine according to the embodiment of the present invention.
[Fig. 3] Fig. 3 (a) and Fig. 3(b) are diagrams showing a secondary flow in prior art.
[Fig. 4] Fig. 4(a) and Fig. 4(b) are diagrams showing the secondary flow in the embodiment of the present invention.
[Fig. 5] Fig. 5 (a) and Fig. 5 (b) are diagrams showing sections of concave portions according to the embodiment of the present invention.
[Fig. 6] Fig. 6(a) to Fig. 6(e) are diagrams showing arrangement examples of the concave portions according to the embodiment of the present invention.
[Fig. 7] Fig. 7 is a diagram showing an arrangement of the blade according to the embodiment of the present invention.
[Fig. 8] Fig. 8 is a diagram showing a concave-portion forming region according to the embodiment of the present invention in a case where a bending portion has been formed.
[Fig. 9] Fig. 9 is a graph showing a result of evaluation test for a pressure loss between blades depending on the presence/absence of the concave portion according to the embodiment of the present invention.

### DESCRIPTION OF EMBODIMENTS

Hereinafter, an axial turbo machine (axial turbomachine) (or an end wall structure of the axial turbo machine) according to an embodiment of the present invention will be described on the basis of the attached drawings. Note that the same numerals are attached to parts that are common among the respective drawings, and repeated description thereof is omitted. The axial turbo machine according to the present embodiment is an axial gas turbine engine. Hereinafter, this gas turbine engine will be simply referred to as an engine for the convenience of description. Note that the axial turbo machine according to the present invention includes an aircraft turbofan engine, a turbojet engine, a turbo-prop engine, a turbo-shaft engine, a turbo-ram jet engine, a gas turbine for power generation, a marine gas turbine, and the like. However, the present invention is not limited to applications-use forms of them that have been exemplified.

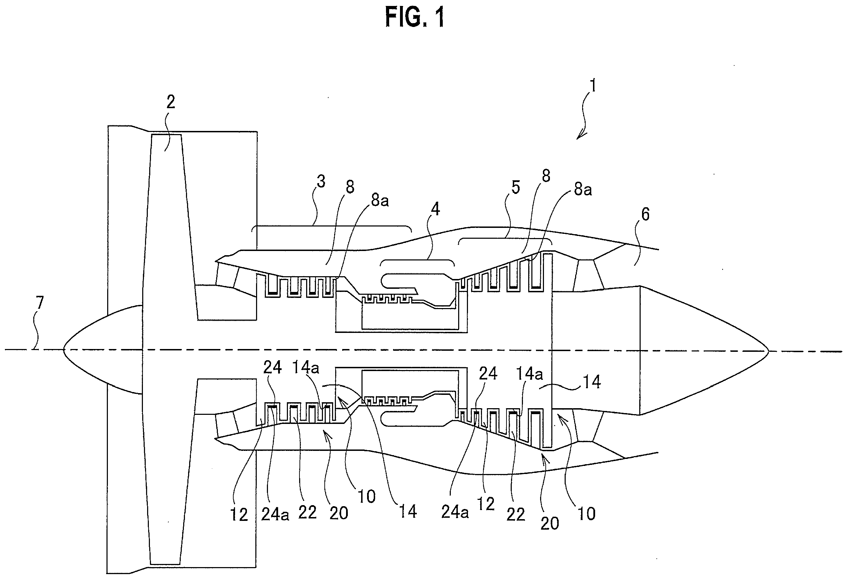

As shown in Fig. 1, an engine 1 is provided with a fan 2, a compressor 3, a combustion chamber 4, and a turbine 5. Basic configuration and operations (namely, compression of a fluid, combustion, conversion from pressure energy into kinetic (rotational) energy and the like) of the engine 1 of the present embodiment may be the same as those of a conventional engine. Namely, the compressor 3 compresses the fluid (a working fluid, air in the present embodiment) that the fan 2 has sucked in, and the combustion chamber 4 burns mixed gas of the compressed fluid and fuel. Furthermore, the turbine 5 converts the pressure energy of expanding combustion gas into the rotational energy for a rotor 10 in the turbine 5 and discharges this gas through an exhaust duct 6. Note that the compressor 3 of a multiaxial type that has been divided into a plurality of compressors in accordance with the pressure of the fluid maybe adopted. The same also applies to the turbine 5.

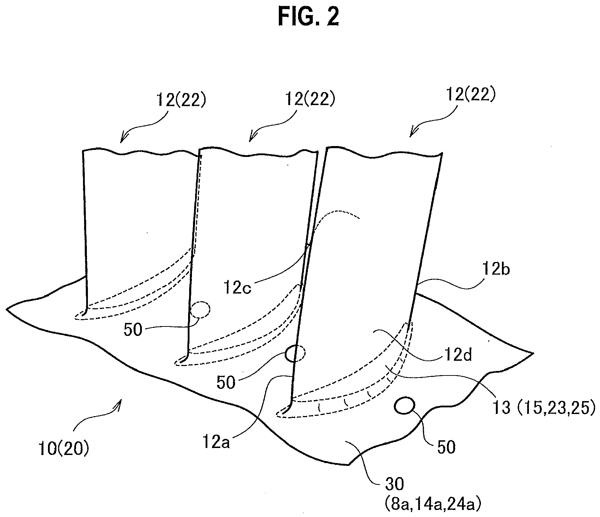

As shown in Fig. 1, the compressor 3 and the turbine 5 are respectively provided with the rotors 10 and the stators 20. Fig. 2 is an enlarged diagram of blades and the periphery thereof in the rotor 10 or the stator 20. Fig. 2 shows base end parts or tip parts of the blades and an end wall to which the blades have been fixed in the rotor 10 (or the stator 20). As described later, this end wall, if it is the rotor 10, is a side surface (an outer peripheral surface) 14a of a rotating body 14 that corresponds to a platform of a blade (a moving blade) 12, and if it is the stator 20, is an outer surface 24a of a vane support 24 that corresponds to a platform of a blade (a stationary blade) 22 or an inner surface 8a of a casing 8 that corresponds to a shroud of the blade 22. Note that, in a case where the shroud is provided at the tip of the blade (the moving blade) 12, the inner surface of this shroud corresponds to the end wall.

The rotor 10 includes the plurality of blades 12 that constitutes at least one moving blade row, and the rotating body (drum) 14 that supports the base end part (an end part, a hub) 13 (see Fig. 2) sides of the blades 12 and rotates integrally with the plurality of blades 12, with a rotation central axis 7 being set as a central axis. The rotor 10 is housed in the cylindrical casing 8 so as to be rotatable. The respective blades 12 are radially arranged centering on the rotation central axis 7 of the rotating body 14. In other words, the plurality of blades 12 is arrayed at intervals in a circumferential direction of the rotation central axis 7. The base end part (the end part) 13 of each blade 12 is fixed to the side surface 14a of the rotating body 14. In addition, a tip part (an end part) 15 of each blade 12 is separated from the inner surface 8a of the casing 8 by a predetermined distance.

The stator 20 includes the plurality of blades (vanes) 22 that constitutes at least one stationary blade row, and the annular vane support 24 provided on the base end part (the end part, the hub) 23 side of the blade 22. Similarly to the rotor 10, the stator 20 is also housed in the casing 8. The respective blades 22 are arranged radially centering on the rotation central axis 7 of the rotating body 14. In other words, the plurality of blades 22 is arrayed at intervals in a circumferential direction that is orthogonal to the rotation central axis 7. The base end part (the end part) 23 of each blade 22 is fixed to the outer surface 24a of the vane support 24. In addition, the tip part (the end part) 25 of each blade 22 is fixed to the inner surface 8a of the casing 8. Note that each blade 22 may be supported to the outer surface 24a of the vane support 24 and the inner surface 8a of the casing 8 so as to be rotatable (swingable) by using a predetermined support member (not shown). In this case, the plurality of blades 22 synchronously rotates (swings) around an axial line that is orthogonal to the rotation central axis 7.

As shown in Fig. 2, the blade 12 of the rotor 10 has a front edge (a leading edge) 12a, a rear edge (a trailing edge) 12b, a ventral surface (a pressure surface) 12c, and a back surface (a suction surface) 12d. Furthermore, any of the blades 12 has the same cross-sectional shape and is curved so as to project circumferentially in the same direction. Since the blade 22 of the stator 20 has also the same shape, description thereof is omitted.

The moving blade rows of the rotor 10 and the stationary blade rows of the stator 20 are alternately arranged along the rotation central axis 7. The number of combinations (namely, stages) of the moving blade rows and the stationary blade rows is appropriately set in accordance with the specification of the engine 1.

In the rotor 10, the side surface 14a of the rotating body 14 is provided on the end part (the base end part) side of the blade 12. Likewise, in the stator 20, the outer surface 24a of the vane support 24 and the inner surface 8a of the casing 8 are provided on the end part (the base end part 23 or a tip part 25) side of the blade 22. They are an end wall 30 to which the blades 12 or the blades 22 are fixed, in other words, to which the relative position to the blades 12 or the blades 22 is fixed, and which forms a channel of the fluid together with the blades 12 or the blades 22.

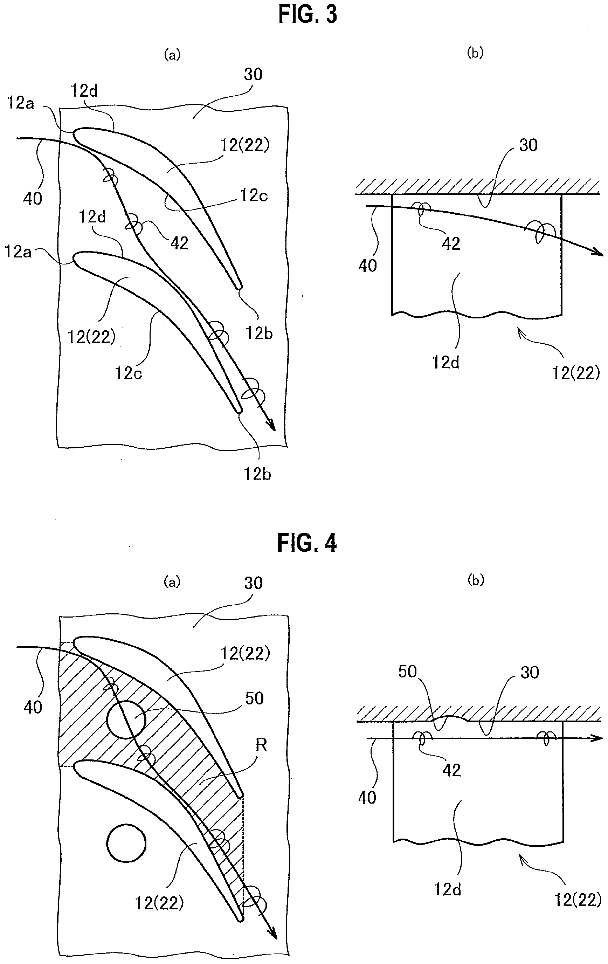

As described at the beginning, when the fluid flows into the rotor 10 and the stator 20, a secondary flow 40 of the fluid is generated in the vicinity of the end wall 30 at the front edge 12a of the blade 12 or the blade 22. As shown in Fig. 3(a) and Fig. 3(b), the secondary flow 40 reaches the back surface 12d of the adjacent blade 12 while diffusing as advancing substantially along the end wall 30. After that, the secondary flow 40 advances to the rear edge 12b of the adjacent blade 12 along the back surface 12d and further flows out rearwards. Since the secondary flow 40 has a flow component in a direction different from that of the original fluid flow, the flow generates a vortex 42 involving the pressure loss and grows the vortex.

In contrast, a concave portion (a dimple) 50 of the present embodiment controls the secondary flow 40 of the fluid. Specifically, the concave portion 50 suppresses diffusion of the secondary flow 40 and suppresses the magnitude of the vortex 42 and expansion of a generation region thereof. Namely, as shown in Fig. 4 (a) and Fig. 4(b), the concave portion 50 deflects the secondary flow 40 that goes away from the end wall 30 in a direction that is directly along the end wall 30. Alternatively, the concave portion 50 generates a new flow and deflects the secondary flow 40 in the direction that is along the end wall 30 by using this flow. Alternatively, the concave portion 50 controls a boundary layer that flows in and weakens the magnitude of the vortex 42 generated.

The concave portion 50 will be described in detail. Hereinafter, a case where the concave portion 50 is formed in the end wall 30 (namely, in the outer surface 24a of the vane support 24 or the inner surface 8a of the casing 8) of the stator 20 will be described for the convenience of description. Since the same also applies to a case where the concave portion 50 is formed in the end wall 30 (namely, in the side surface 14a of the rotating body 14 or the inner surface 8a of the casing 8) of the rotor 10, description thereof is omitted.

As shown in Fig. 4 (a), the concave portion 50 is locally formed in the surface of the end wall 30 at least by one. Here, "locally formed in the surface" means forming, while leaving a surface that defines the entire shape of the end wall 30 as it is, a structure having a surface that is different from that surface (for example, the surface having a curvature that is different from the curvature of the surroundings) in part of that surface. In addition, the concave portion 50 is formed in a region R on the surface of the end wall 30. The region R is located between the adjacent blades 12 or on the upstream side (namely, the inlet port side of the engine 1) of the front edge 12a of the blade 12.

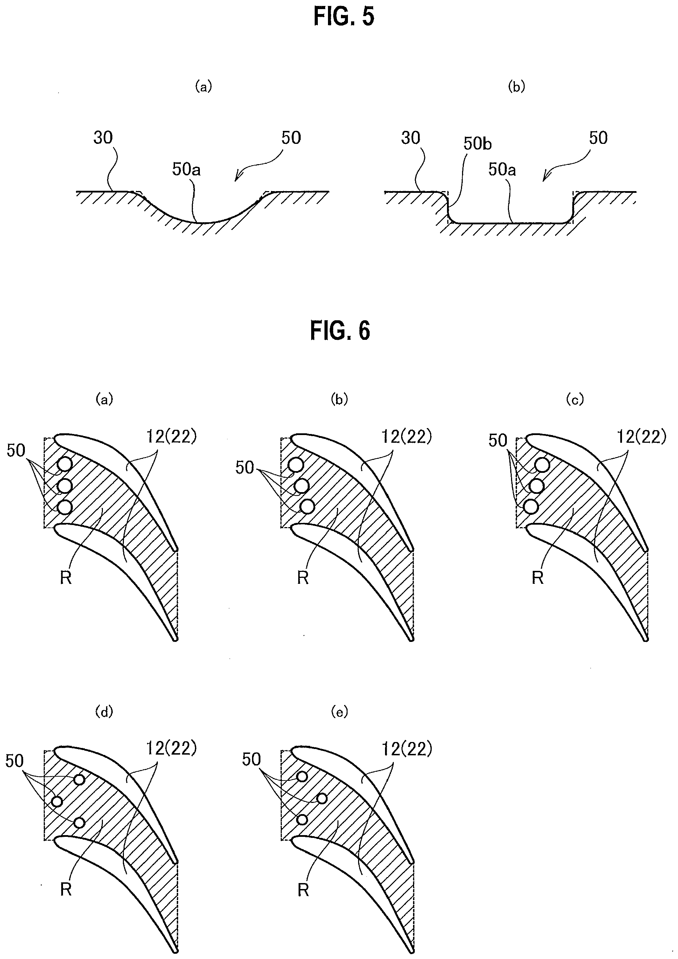

The shape of the concave portion 50 is optional as long as the secondary flow 40 is controlled while maintaining a mechanical strength of the blade. Such a shape is at least one of, for example, a circular shape, an elliptical shape, a fan shape and a rectangular shape. Alternatively, the shape may be a composite shape of them. In addition, the same also applies to the dimensions of the concave portion. Fig. 5 (a) and Fig. 5(b) show examples of a cross-sectional shape when the concave portion 50 is circular. Namely, as shown in Fig. 5(a), a bottom surface 50a of the concave portion 50 may be formed as a curved surface so as to be continuously connected to the surface of the end wall 30 around the concave portion 50. Alternatively, as shown in Fig. 5(b), the bottom surface 50a may be formed as a plane and may have a cylindrical inner surface 50b. Note that, in either case, all surfaces are smoothly connected with the surrounding surfaces in order to ensure the mechanical strength. Namely, a boundary part (a dotted-line part in Fig. 5(a) and Fig. 5(b)) between the surface and the surface is formed so as to be curved. In addition, the plurality of concave portions 50 may be provided in one region R. For example, the plurality of concave portions 50 may be arranged in an extending direction of the blade row (see Fig. 6(a)). Furthermore, the arrangement of the plurality of concave portions 50 is not limited to that in the extending direction of the blade row and may be inclined relative to this extending direction (see Fig. 6(b), Fig. 6(c)). Moreover, the arrangement of the concave portion 50 is not limited to one row. For example, as shown in Fig. 6(d) and Fig. 6(e), the plurality of concave portions 50 may be staggered relative to the extending direction (or a central line and the like of the channel) of the blade row. Note that the number and the arrangement thereof in a case where the plurality of concave portions 50 is to be provided are appropriately set in accordance with the shape of the blades 12, a space (a pitch) between the blades and the like.

In order to effectively suppress diffusion of the secondary flow 40, it is preferable to provide the concave portion 50 at a position before the secondary flow 40 separates from the end wall 30. Accordingly, although not limiting the present invention, it is preferable to provide the concave portion 50 rather on the upstream side than on the downstream side where the secondary flow has already diffused. However, when the concave portion 50 is provided on the extremely upstream side, there is a possibility that a flow generated by the concave portion 50 may attenuate before exerting influence on the secondary flow 40. Therefore, it is conceivable to set an appropriate position, dimension, shape (in case of the plurality, furthermore, the number of them and the arrangement thereof) and the like of the concave portion 50 by utilizing an analysis and the like by computational fluid dynamics (CFD).

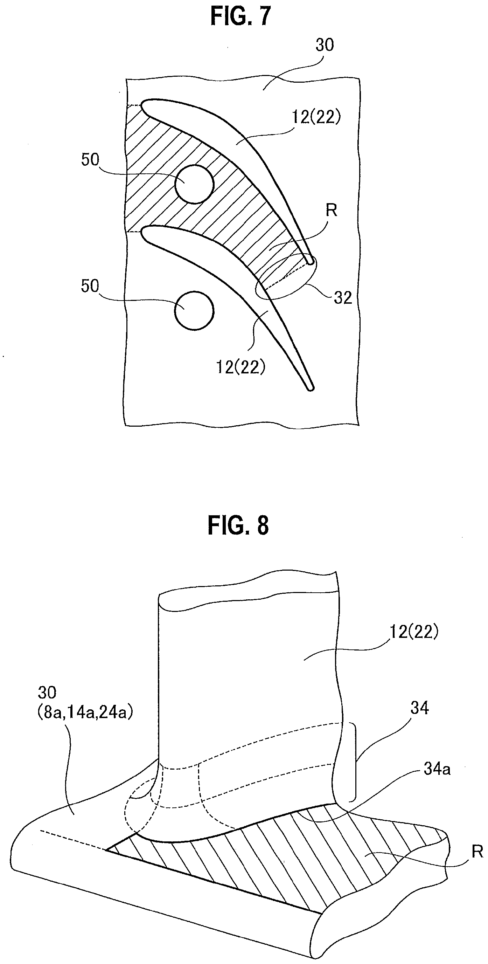

For example, as shown in Fig. 7, the turbine 5 adopts a convergent (convergence)-type channel for the stator 20 (or the stator 20 and the rotor 10). That is, the plurality of blades 22 forms a throat 32 in which the cross-sectional area of the channel between the blades is minimized. In a case where the throat 32 is formed, conversion (or inverse conversion) from the pressure energy of the fluid into the kinetic energy is performed mainly on the upstream side thereof. Accordingly, it is preferable to set the region R where the concave portion 50 is to be provided, on the upstream side of the throat 32, and in this case, the secondary flow causing the pressure loss and expansion of the vortex in association therewith can be suppressed on the upstream side of the throat 32.

In a case where the blade 12 is fixed to the end wall 30 as shown in Fig. 8, a bending portion 34 is provided at a corner formed by fixing of the blade 12 to the end wall 30. The bending portion 34 is integrally formed as, for example, a part of the blade 12 and continuously (that is, smoothly) connects the surface of the blade 12 with the surface of the end wall 30. The concave portion 50 of the present embodiment is formed keeping away from the bending portion 34. Namely, a boundary between the region R and another region includes an edge part 34a on the end wall 30 side of the bending portion 34.

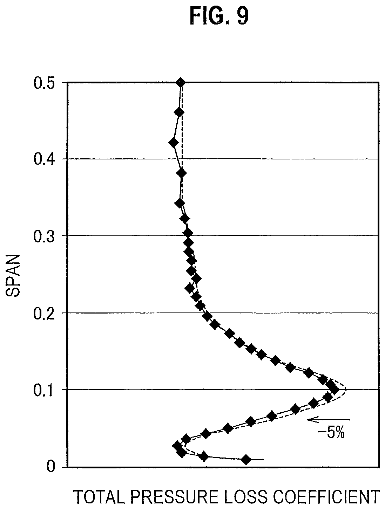

Fig. 9 is a graph showing a result of evaluation test for the pressure loss between the blades depending on the presence/absence of the concave portion of the present embodiment. The vertical axis of this graph indicates a distance (a span) in a longitudinal direction of the blade, with the end wall being set as a base point. This distance is made non-dimensional by the length of the blade in the longitudinal direction and 0.5 indicates the center of the blade. In this evaluation test, only one concave portion was provided in the center between the adjacent blades in the extending direction of the blade row, and at a position of about 30% relative a chord length of the blade from the front edge of the blade. In addition, assuming that the concave portion is the circular one (see Fig. 5(a)) having the curved bottom surface, the diameter thereof was set to about 10% of the inter-blade pitch and a deepest part was set to about 2% of the inter-blade pitch.

In the graph in Fig. 9, a dotted line indicates the pressure loss in a case where the end wall has no concave portion and a solid line and square dots indicate the pressure loss in a case where the end wall has the concave portion. In either case, an increase in pressure loss (a total pressure loss coefficient) caused by the secondary flow is seen at each position that is within 20% from the end wall. However, in a region that is within 20% from the ends wall, remarkable improvement of the pressure loss was seen in a case where the concave portion was provided in comparison with a case where the concave portion is not provided. For example, in the vicinity of the span of 10%, the pressure loss is improved by about 5% in the case where the concave portion was provided in comparison with the case where the concave portion is not provided. From such a result, it was found that the pressure loss for every blade row can be improved by 3% or more in comparison with the case where the ends wall has no concave portion.

As described above, according to the present embodiment, diffusion of the secondary flow that generates the vortex and diffusion of the vortex itself are suppressed by formation of the concave portion. Since the secondary flow that has been generated in the vicinity of the end wall can be retained to the vicinity of the end wall, interference with the mainstream of the fluid can be suppressed and a reduction in pressure loss caused by the vortex and the like can be suppressed.

Note that the present invention is not limited to the above-mentioned embodiment. Namely, addition, omission, substitution and other modifications of configurations are possible within a range not deviating from the gist of the present invention.

## Claims

1. An axial turbo machine, comprising:
a plurality of blades that constitutes a moving blade row or a stationary blade row;
an end wall to which the plurality of blades is fixed and which forms a channel of a fluid together with the blades; and
at least one concave portion that is locally formed in a region located between the adjacent blades or on an upstream side of a front edge of the blade on a surface of the end wall and that controls a flowing direction of a secondary flow of the fluid.

2. The axial turbo machine according to claim 1, wherein
a bending portion that continuously connects a surface of the blade with the surface of the end wall is provided at a corner that has been formed by fixing of the blade to the end wall, and
a boundary between the region and another region includes an edge part on the end wall side at the bending portion.

3. The axial turbo machine according to claim 1 or 2, wherein
the blades form a throat of the channel, and
the concave portion is located on an upstream side of the throat.

4. The axial turbo machine according to any one of claims 1 to 3, wherein
the concave portion has a shape of at least one of a circular shape, an elliptical shape, a fan shape and a rectangular shape.

5. The axial turbo machine according to any one of claims 1 to 4, wherein
the concave portion is provided in a plural number in the region.

## Amended claims

### Amended claims under Art. 19.1 PCT

**1.** (Amended) An axial turbo machine, comprising:
a plurality of blades that constitutes a moving blade row or a stationary blade row;
an end wall to which the plurality of blades is fixed and which forms a channel of a fluid together with the blades; and
at least one concave portion that is locally formed in a region located between the adjacent blades or on an upstream side of a front edge of the blade on a surface of the end wall and that controls a flowing direction of a secondary flow of the fluid,
wherein only the at least one concave portion is locally provided in the region on the surface of the end wall.

**2.** The axial turbo machine according to claim 1, wherein
a bending portion that continuously connects a surface of the blade with the surface of the end wall is provided at a corner that has been formed by fixing of the blade to the end wall, and
a boundary between the region and another region includes an edge part on the end wall side at the bending portion.

**3.** The axial turbo machine according to claim 1 or 2, wherein
the blades form a throat of the channel, and
the concave portion is located on an upstream side of the throat.

**4.** The axial turbo machine according to any one of claims 1 to 3, wherein
the concave portion has a shape of at least one of a circular shape, an elliptical shape, a fan shape and a rectangular shape.

**5.** The axial turbo machine according to any one of claims 1 to 4, wherein
the concave portion is provided in a plural number in the region.
